# FASCICULE DE BREVET EUROPEEN

(11) **EP 3 453 448 B1**
(45) Date de publication et mention de la délivrance du brevet: **28.02.2024**
(21) Numéro de dépôt: 18184824.3
(22) Date de dépôt: 20.07.2018
(51) Int. Cl.: C10G 11/18, B01J 19/32

(54) **ELEMENT DE GARNISSAGE STRUCTURE AYANT UNE FORME D'HELICE HELICOÏDALE**
STRUKTURIERTES PACKUNGSELEMEN MIT SCHRAUBENFORM
STRUCTURED PACKING ELEMENT HELICAL IN SHAPE

(30) Priorité: 12.09.2017 FR 1758444
(43) Date de publication de la demande: 13.03.2019
(73) Titulaire: AXENS, 92508 Rueil-Malmaison Cedex (FR)
(72) Inventeur: LAMBERT, Marie Amélie, 78400 CHATOU (FR); AIT-MHAND, Driss, 93140 BONDY (FR); BERNARD, Florence, 92110 CLICHY (FR); TOUPANCE, Jean-Philippe, 75011 PARIS (FR)
(74) Mandataire: IFP Energies nouvelles

(56) Documents cités:
- EP-A1- 0 052 336
- DD-A1- 227 885
- JP-A- H06 254 369
- JP-U- S59 138 423

## Description

La présente invention concerne le domaine du garnissage structuré, utilisé notamment pour une opération de stripage d'hydrocarbures entrainés ou adsorbés sur des grains de catalyseurs.

L'invention peut concerner notamment le domaine des procédés de craquage. La présente invention peut notamment être mise en oeuvre dans un procédé de craquage catalytique en lit fluidisé (FCC : Fluid Catalytic Cracking selon la terminologie anglo-saxonne) pour craquer des charges lourdes telles que des résidus sous vide ou des distillats sous vide, mais également à des FCC traitant des charges plus légères. Elle peut également être mise en oeuvre dans des unités de craquage de naphta (unités NCC ou Naphtha Catalytic Cracking selon la terminologie anglo-saxonne) ou encore dans des unités de craquage à forte conversion (DCC : Deep Catalytic Cracking selon la terminologie anglo-saxonne ou HS-FCC : High Severity Fluid Catalytic Cracking selon la terminologie anglo-saxonne), ou encore dans des unité de transformation du méthanol en oléfines (MTO : methanol to olefins selon la terminologie Anglo-saxonne) ou en essence (MTG : methanol to gasoline selon la terminologie anglo-saxonne).

Plus particulièrement, la présente invention peut être utilisée dans des unités de craquage catalytique en lit fluidisé (Fluid Catalytic Cracking selon la terminologie anglo-saxonne), également appelées unités FCC dans la suite de cette description.

Les unités FCC peuvent fonctionner soit avec un seul réacteur en courant ascendant (riser) ou descendant (downflow reactor) orienté vers la production d'essence, soit avec deux réacteurs, un réacteur principal orienté vers la production d'essence et un réacteur secondaire orienté vers la production de propylène.

Dans un procédé FCC, les hydrocarbures sont contactés dans le réacteur avec un catalyseur finement divisé. Lors de la réaction de craquage des hydrocarbures, dont certains sont en partie craqués, sont déposés sur le catalyseur. Ces hydrocarbures plus ou moins craqués sont généralement appelés « coke ». Il est donc nécessaire de transporter le catalyseur vers un ou plusieurs régénérateurs afin d'éliminer ces hydrocarbures en continu et ainsi de régénérer le catalyseur.

Toutefois, il est nécessaire avant l'envoi du catalyseur usagé au régénérateur d'éliminer au préalable tout ou partie des hydrocarbures qui ont pénétré dans la porosité importante du catalyseur ou qui sont adsorbés sur sa surface. Cela permet de diminuer et mieux contrôler la température au régénérateur, et d'améliorer la récupération de produits valorisables issues du craquage. Cette opération est réalisée dans un strippeur dans lequel un gaz, généralement de la vapeur, est circulé à contre-courant du flux de catalyseur. Ledit gaz se charge en hydrocarbures gazeux éliminés ainsi de la surface ou de la porosité du catalyseur. L'efficacité de cette opération est augmentée par l'ajout d'inserts (baffles selon la terminologe anglo-saxonne) ou de garnissage (packing selon la terminologie anglo-saxonne) dans la zone de stripage.

Les inserts ou garnissage sont généralement disposés dans la partie inférieure du stripeur dans la phase dense de manière à réduire les entrainements de particules solides vers la phase diluée.

Un stripage efficace des hydrocarbures et précurseurs de coke présents sur le catalyseur usé est essentiel, d'autant que les charges traitées sont de plus en plus lourdes, ce qui nécessite des conditions opératoires de craquage plus sévères et engendre la formation de quantités de coke plus importantes sur le catalyseur.

Dans une unité catalytique opérant en lit fluidisé, le garnissage disposé dans la zone de stripage présente l'avantage d'assurer une bonne distribution du catalyseur dans la zone de stripage et d'avoir une bonne efficacité de contact entre le catalyseur usé et le fluide de stripage.

En outre, le garnissage structuré trouve également des applications pour la mise en contact de fluides, notamment dans le domaine du traitement de gaz, de la distillation, de captage de gaz acides, de déshydratation ou de séparation d'air. Pour ces domaines d'application, le garnissage remplit des fonctions similaires au garnissage utilisé pour le strippage. Pour ces applications, le garnissage doit aussi être simple et rapide à monter au sein de la colonne.

JP H06 254369 A décrit un garnissage de mélange et dispersion constitué d'une combinaison de plusieurs éléments consistant en une feuille de tôle torsadée comportant une partie torsadée droite et une partie torsadée gauche autour d'un axe parallèle.

JP S59 138423 U décrit une colonne à garnissage facile à remplir avec un garnissage constitué par des hélices juxtaposées, moins susceptible de provoquer une accumulation de liquide et une dérive dans la colonne.

EP 0 052 336 A1 décrit un garnissage constitué par des hélices juxtaposées et empilées parallèlement les unes aux autres dans un agencement axialement symétrique.

La présente invention concerne un élément de garnissage structuré ayant une forme d'hélice hélicoïdale.

La présente invention concerne également une structure de garnissage obtenu par assemblage de tels éléments de garnissage, l'utilisation d'un tel garnissage pour une opération de mise en contact d'un gaz et d'un catalyseur.

L'invention est exposée dans le jeu de revendications joint.

La structure de garnissage selon la présente invention permet d'obtenir une distribution radiale meilleure et homogène des solides et/ou des fluides mis en contact, en particulier des particules de catalyseur le long des hélices hélicoïdales, et améliore ainsi la mise en contact entre les particules de catalyseur et la phase vapeur pour le cas du strippage.

### Présentation succincte des figures

D'autres caractéristiques et avantages du dispositif et du procédé selon l'invention, apparaîtront à la lecture de la description ci-après d'exemples non limitatifs de réalisations, en se référant aux figures annexées et décrites ci-après.
La figure 1 illustre un stripper selon un mode de réalisation de l'invention. La figure 1a est une vue générale d'un stripper incluant une structure de garnissage selon l'invention. La figure 1b illustre le garnissage structuré du stripper de la figure 1.
La figure 2 représente un élément de garnissage selon un mode de réalisation de l'invention.
La figure 3 représente une vue en plan d'une extrémité d'une structure de garnissage selon un mode de réalisation de l'invention.
La figure 4 représente une vue tridimensionnelle d'une structure de garnissage selon un mode de réalisation de l'invention.
La figure 5 représente une vue tridimensionnelle d'un ensemble de deux structures de garnissage selon un mode de réalisation de l'invention.

### Description détaillée de l'invention

### Structure de garnissage

La présente invention concerne une structure de garnissage structuré. On appelle garnissage structuré une juxtaposition de plusieurs éléments unitaires, appelés encore éléments de garnissage, identiques ou non, agencés de manière ordonnée. Selon l'invention, l'élément unitaire de garnissage structuré est une plaque torsadée ayant sensiblement une forme d'hélice hélicoïdale. Les dimensions de la plaque sont choisies de telle sorte qu'elles permettent l'obtention d'une hélice hélicoïdale par torsion de ladite plaque.

Selon l'invention, la structure de garnissage est composée d'un nombre n de séries verticales d'éléments de garnissage juxtaposés, où n est au moins égale à 2. Chaque série est composé de m éléments de garnissage accolés dans le sens de leurs hauteur, où m est au moins égale à 2. Les éléments de garnissage de deux séries verticales distinctes sont juxtaposés de façon sensiblement parallèle dans le sens de la hauteur. En vue de dessus, au sein d'une série, les éléments de garnissage sont alignés.

La structure de garnissage selon la présente invention permet d'obtenir une distribution radiale optimisée et homogène des solides et/ou des fluides mis en contact le long des hélices hélicoïdales, ce qui permet d'améliorer les échanges entre les solides et/ou les fluides. En particulier, la structure de garnissage selon l'invention permet d'obtenir une distribution radiale homogène des particules de catalyseur le long des hélices hélicoïdales, et améliore ainsi la mise en contact entre les particules de catalyseur et la phase vapeur pour le cas du stripage.

De préférence, la structure de garnissage comprend n séries verticales d'éléments de garnissage, lesdites séries comprennent indépendamment un nombre m d'éléments de garnissage accolés, dans laquelle,
n est compris entre 1 et 300, de préférence entre 2 et 300, et de manière plus préférée entre10 et 250, et
m est compris entre 2 et 300, de préférence entre 15 et 200

Conformément à un aspect de l'invention, la structure de garnissage peut avoir une hauteur comprise entre 20 et 50 cm, de préférence entre 20 et 40 cm. Cette dimension permet une insertion de la structure de garnissage dans la colonne. De plus, cette dimension correspond sensiblement à la longueur d'un élément de garnissage

Afin de renforcer la stabilité et la solidité de la structure de garnissage, une solidarisation de la structure est mise en oeuvre par fixation des éléments de garnissage, par exemple par soudage, par collage, par vissage, par boulonnage, ou tout moyen analogue. De préférence, la fixation est mise en oeuvre par soudage.

### Elément de garnissage

Selon l'invention, l'élément de garnissage comprend, de préférence est constitué, d'une plaque torsadée ayant une forme d'hélice hélicoïdale. De préférence, la plaque torsadée est avant torsion sensiblement rectangulaire. Ledit élément de garnissage est caractérisé notamment par sa hauteur, sa largeur, la valeur du pas définissant la torsade, et l'épaisseur de la plaque torsadée.

De préférence, l'épaisseur, noté e, de la plaque de l'élément de garnissage est compris entre 2 et 10 mm, de préférence entre 4 et 8 mm. Cette épaisseur permet la torsion de la plaque en une hélice hélicoïdale par tout moyen connu de l'Homme du métier.

De préférence, la hauteur, noté h, de l'élément de garnissage est compris entre 20 et 100 cm, de préférence entre 22 et 80 cm et de préférence entre 25 et 50 cm. Cette hauteur permet une insertion dans une colonne (par exemple un stripper).

De préférence la largeur, noté I, de l'élément de garnissage est compris entre 5 et 30 cm et de préférence 8 et 25. Ainsi, les espaces formés dans le garnissage structuré ont des dimensions adaptées pour favoriser les échanges entre les deux fluides ou entre un fluide et des solides (par exemple catalyseur).

De préférence, le pas de l'élément de garnissage, noté p, caractérisant l'hélice est compris entre 10 et 30 cm, et de préférence entre 10 et 20 cm. On entend par pas la distance séparant deux sommets adjacents de l'hélice hélicoïdale parallèlement à la hauteur de ladite hélice.

De préférence, le pas de l'ensemble des éléments de garnissage d'une même série est identique. De préférence, le pas de l'ensemble des éléments de garnissage composant une structure de garnissage est identique, et permet ainsi avantageusement l'obtention d'une structure régulière.

Selon l'invention, les deux arêtes des deux extrémités d'un élément de garnissage sont parallèles. On entend par arête (22 et 23) les extrémités de l'élément de garnissage dont la dimension correspond à la largeur de la plaque. Ainsi, l'élément de garnissage forme un nombre entier d'hélices.

Selon l'invention, les arêtes extrêmales des éléments de garnissage d'une même série verticale sont parallèles entre elles.

De préférence, les arêtes des deux extrémités d'un élément de garnissage sont perpendiculaires à la hauteur dudit élément de garnissage.

Selon l'invention, lorsque les arêtes des éléments de garnissage d'une première série verticale sont parallèles entre elles, les arêtes des éléments de garnissage de la seconde série verticale juxtaposée sont perpendiculaires aux arêtes de la première série. Ainsi, la structure de garnissage peut comprendre des éléments de garnissage avec une pluralité de séries d'éléments de garnissage avec des séries pour lesquelles les arêtes extrémales sont orientées selon une première direction, et avec des séries pour lesquelles les arêtes extrémales sont orientées selon une deuxième direction perpendiculaire à la première direction. Pour ce mode de réalisation, les séries selon la deuxième direction sont juxtaposées entre les séries selon la première direction.

Selon l'invention, les arêtes de quatre éléments de garnissage adjacents de deux séries juxtaposées forment un carré dont les arêtes sont constituées par les arêtes desdits quatre éléments.

De préférence, la hauteur (h) de la structure de garnissage (20) est égale à au moins deux fois le pas (p) de l'hélice hélicoïdale de l'élément de garnissage (21) présentant la valeur de pas (p) la plus élevée. Ainsi, les éléments de garnissage comprennent au moins deux vrilles.

Selon un exemple de réalisation, l'élément de garnissage peut être réalisé en métal. Il peut être formé par usinage, pour moulage, par déformation plastique d'une plaque plane ou par fabrication additive.

Les éléments de garnissage sont assemblés conformément à l'invention en une structure de garnissage par tout moyen connu de l'Homme du métier.

Un autre objet de l'invention concerne un garnissage structuré comprenant, de préférence constitué, des structures de garnissage selon l'invention.

Conformément à un mode réalisation préféré, le garnissage structuré est composé d'une pluralité de structure de garnissage comprenant indépendamment un nombre n de série, chacune des séries comprenant indépendamment un nombre m d'élément de garnissage dans lesquelles n et m peuvent prendre les valeurs tels que définies précédemment.

Avantageusement, le garnissage structuré a une forme circulaire adaptée à son utilisation pour une opération de stripage d'un catalyseur.

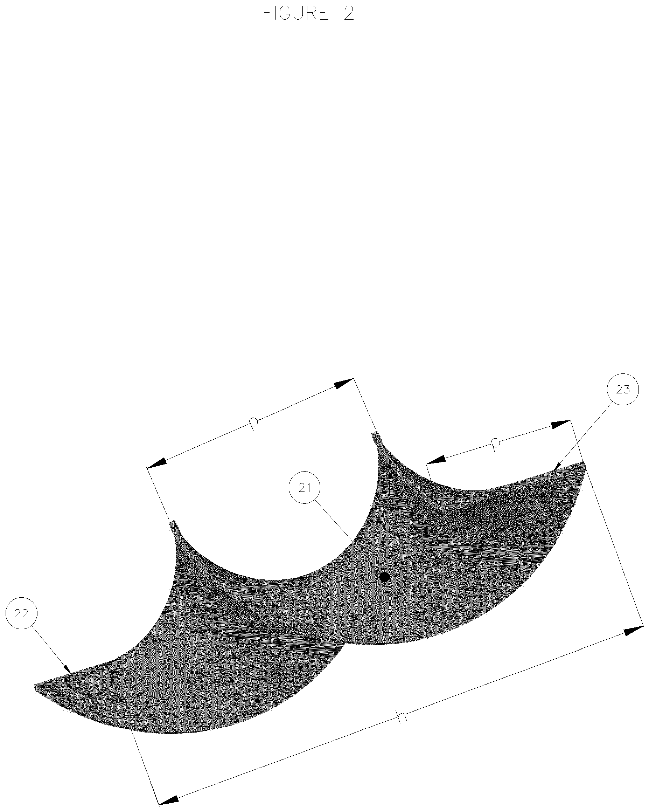

La figure 2 illustre, schématiquement et de manière non limitative, un élément de garnissage selon un mode de réalisation de l'invention. L'élément de garnissage 21 a une forme d'hélice hélicoïdale, avec une hauteur notée h, une largeur notée I, un pas noté p, une arête inférieure 22 et une arête supérieure 23 (l'épaisseur non représentée est inférieure à la hauteur h et à la largeur I).

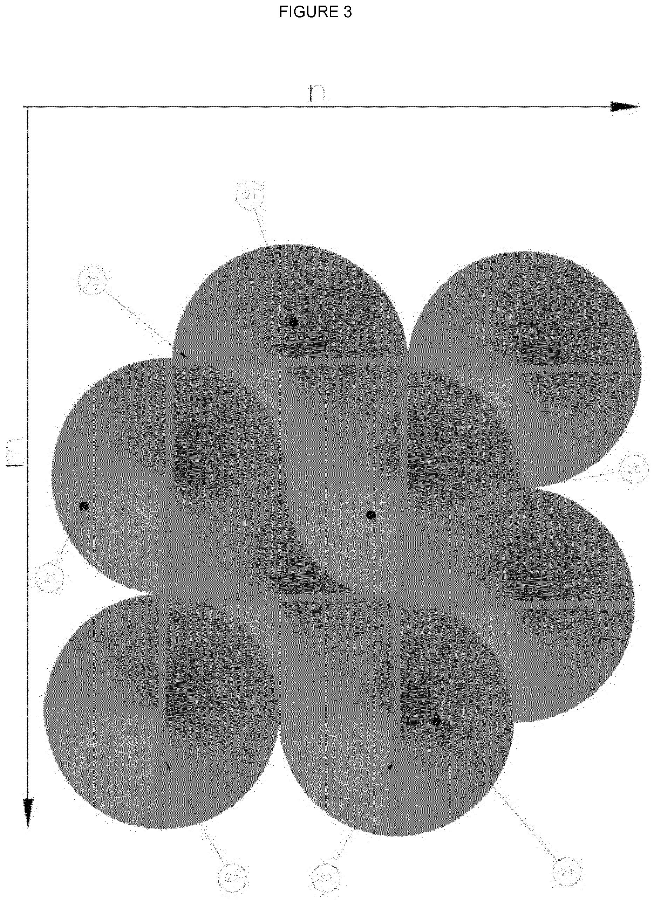

Les figures 3, 4 et 5 représentent, schématiquement et de manière non limitative, une structure de garnissage selon un mode de réalisation de l'invention.

La figure 3 est une vue de l'extrémité inférieur d'une structure de garnissage 20. Ladite structure comprend 4 séries (noté n), chacune des séries comprenant 2 éléments de garnissage (21) (noté m). Les arêtes (22) des éléments de garnissage (21) d'une même série sont parallèles, et les arêtes des éléments de garnissage de deux séries accolées sont perpendiculaires.

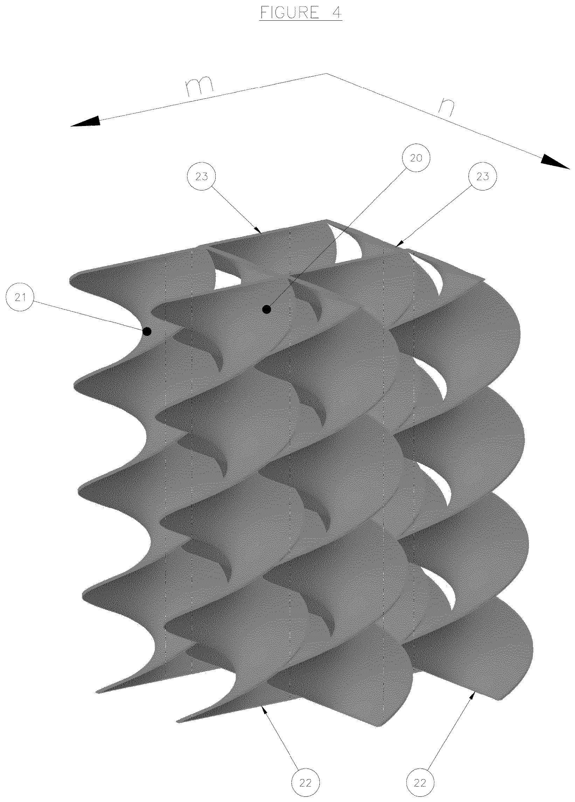

La figure 4 est une vue tridimensionnelle de la structure de garnissage 20. La structure de garnissage comprend 4 séries (noté n), chacune des séries comprenant 2 éléments de garnissage (21) (noté m). Les arêtes inférieures (22) des éléments de garnissage (21) d'une même série sont parallèles, et les arêtes inférieures (22) des éléments de garnissage de deux séries juxtaposées sont perpendiculaires. Les arêtes supérieures (23) sont agencées de façon identiques aux arêtes inférieures (22).

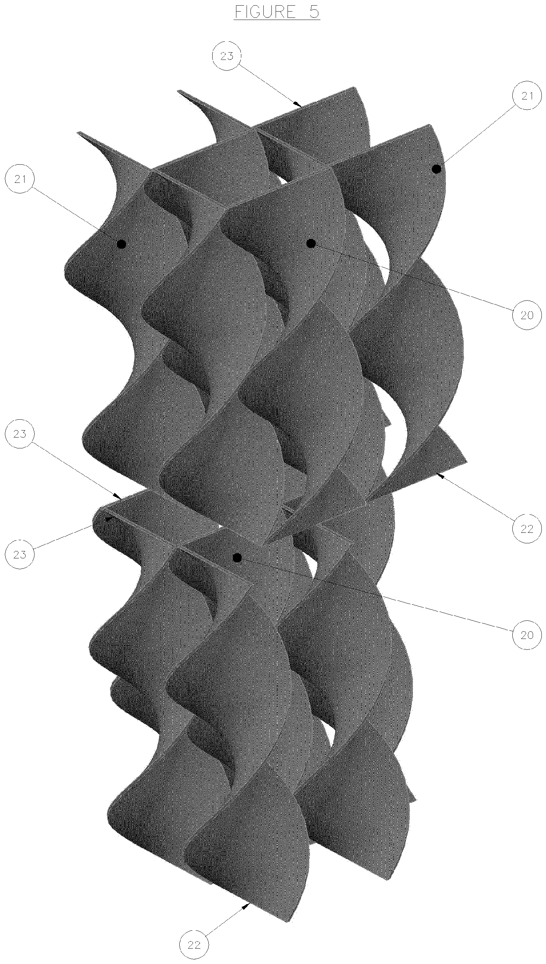

La figure 5 est une vue tridimensionnelle d'un garnissage composé de 2 structures de garnissage, chacune des structures comprenant 4 séries (noté n), chacune des séries comprenant 2 éléments de garnissage (21) (noté m). Les arêtes inférieures (22) des éléments de garnissage (21) d'une même série sont parallèles, et les arêtes inférieures (22) des éléments de garnissage de deux séries juxtaposées sont perpendiculaires. Les arêtes supérieures (23) sont agencées de façon identiques aux arêtes inférieures (22).

### Applications

En outre, la présente invention concerne une utilisation d'un structure de garnissage selon une combinaison quelconque des caractéristiques décrites précédemment pour la mise en contact d'un gaz, avec un catalyseur, notamment pour une opération de strippage d'un catalyseur, par exemple pour un procédé FCC, NCC, DCC, HS-FCC, MTO, MTG ou tout procédé analogue.

Lors de cette opération de strippage du catalyseur, on élimine tout ou partie des hydrocarbures qui ont pénétré dans la porosité importante du catalyseur ou qui sont adsorbés sur sa surface. Cela permet de diminuer et mieux contrôler la température au régénérateur (opération postérieure au strippage), et d'améliorer la récupération de produits valorisables issues du craquage. Cette opération est réalisée dans un strippeur dans lequel un gaz, généralement de la vapeur, est circulé à contre-courant du flux de catalyseur. Ledit gaz se charge en hydrocarbures gazeux éliminés ainsi de la surface ou de la porosité du catalyseur. L'efficacité de cette opération est augmentée par l'ajout de garnissage dans la zone de stripage.

Le garnissage est disposé dans la partie inférieure du stripeur dans la phase dense de manière à réduire les entrainements de particules solides vers la phase diluée.

Dans une unité catalytique opérant en lit fluidisé, le garnissage selon l'invention présente l'avantage d'assurer une bonne distribution du catalyseur dans la zone de stripage et d'avoir une bonne efficacité de contact entre le catalyseur usé et le fluide de stripage.

Pour cette utilisation, l'enceinte de strippage peut comprendre :
- un système de séparation du catalyseur et des gaz craqués,
- un cyclone pour séparer une fraction de catalyseur,
- un garnissage tel que décrit précédemment pour mettre en contact le catalyseur avec un gaz dans le but d'éliminer les hydrocarbures ayant pénétrés ou ayant été adsorbés par le catalyseur, et
- au moins une conduite d'insertion de gaz pour distribuer le gaz sur le garnissage.

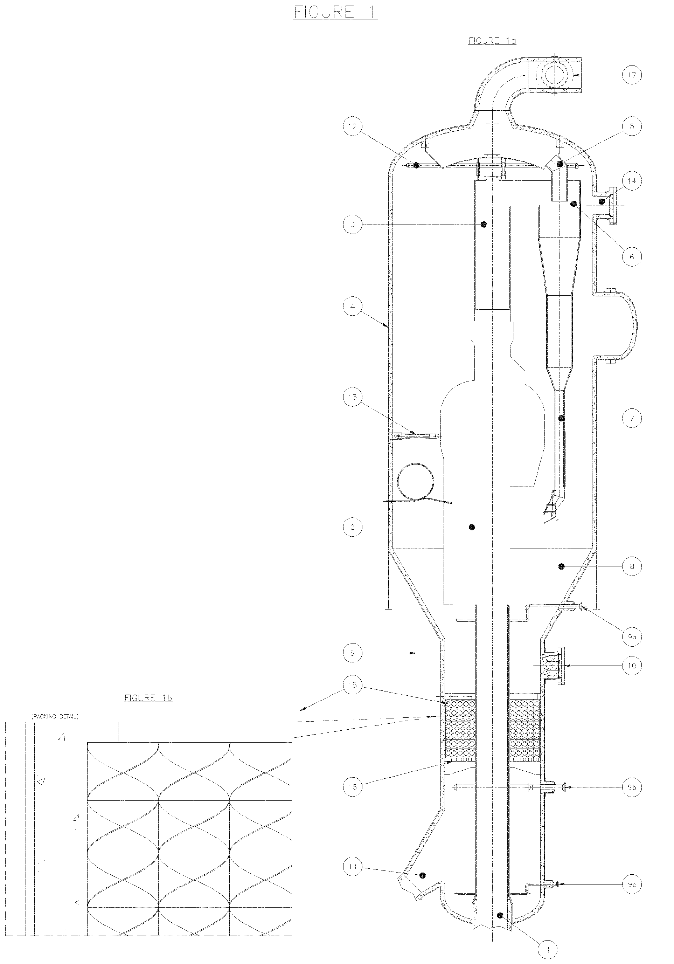

La figure 1a présente, schématiquement et de manière non limitative, une vue générale d'un stripper S incluant une structure de garnissage selon un mode de réalisation de l'invention. Sur cette figure est visible la partie haute du réacteur 1 qui fonctionne à courant ascendant (riser) et débouche dans un système de séparation 2 permettant de séparer le catalyseur et les gaz craqués. Ledit système peut être de tout type connu de l'homme du métier. Les gaz craqués sont envoyés via la conduite 3 dans le cyclone 6 et sortent du récipient de désengagement (en anglais disengaging vessel) 4, situé au-dessus de la zone de stripage du stripper S, via les conduites 5 et 17.

Une fraction supplémentaire de catalyseur est séparée dans le cyclone 6 et envoyée dans la jambe (en anglais dipleg) 7 pour aboutir dans le lit dense de catalyseur 8 situé un peu plus bas au-dessus du garnissage 15. Le garnissage 15 est obtenu par superposition de plusieurs couches de structure de garnissage telle que décrite précédemment. Le garnissage 15 est maintenu dans le stripper S via des grilles ou des supports 16. Le catalyseur est strippé par la vapeur admise via les conduits 9a, 9b et 9c puis envoyé vers le régénérateur (non représenté) via la conduite 11. L'élément 12 optionnel permet une injection de vapeur en tête de stripper afin de défavoriser la formation de coke. L'élément 13 est un guide permettant de maintenir le système de séparation 2 à l'écart de la paroi du récipient de désengagement 4.

La figure 1b présente, schématiquement et de manière non limitative, une vue plus détaillée du garnissage 15 de la figure 1a.

Généralement un garnissage structuré est obtenue par superposition et/ou juxtaposition de plusieurs couches de structure de garnissage, de préférence 2 à 20 couches de structure de garnissage, de manière plus préférée 3 à 15 couches et de manière très préférée 4 à 10 couches.

Le garnissage structuré selon l'invention trouve également des applications pour la mise en contact de fluides, par exemple un gaz et un liquide, notamment dans le domaine du traitement de gaz, de la distillation, de captage de gaz acides, de déshydratation ou de séparation d'air.

### Procédé de fabrication

Le procédé de fabrication, qui ne fait pas partie de l'invention, suit les étapes suivantes:
a) on fabrique une pluralité d'éléments de garnissage selon l'une quelconque des combinaisons de caractéristiques précédemment décrites, par exemple par usinage, par moulage, par déformation plastique d'une plaque plane ou par fabrication additive ;
b) on construit un agencement des éléments de garnissage au moyen des étapes suivantes :
   i) on positionne au moins deux éléments de garnissage d'une première série d'éléments de garnissage selon une direction ;
   ii) on assemble au moins deux éléments de garnissage d'une deuxième série d'éléments de garnissage dans le sens de la hauteur des éléments de la première série ;
   iii) on répète les étapes i) et ii) pour former le volume souhaité.

Ainsi assemblés, les éléments de garnissage des deux séries forment un maillage tridimensionnel délimitant des canaux pour favoriser les échanges. Les hélices hélicoïdales des éléments de garnissage permettent une meilleure distribution radiale des éléments à contacter (en particulier pour un gaz avec des particules de catalyseur usé).

De préférence, le procédé de fabrication comprend une étape de fixation des éléments de garnissage entre eux, notamment par soudage, collage, vissage, boulonnage ou tout moyen analogue. De préférence, la solidarisation est mise en oeuvre par soudage.

Le procédé de fabrication comprend une étape de découpe de la structure de garnissage à la forme désirée, notamment selon une portion angulaire de cylindre (c'est-à-dire sensiblement une forme d'une portion de camembert). Ainsi, l'insertion du garnissage dans une colonne est facilitée, ainsi que son montage.

Selon l'invention, les arêtes extrêmales des éléments de garnissage de la première série sont sensiblement perpendiculaires aux arêtes extrêmales des éléments de garnissage de la deuxième série.

## Revendications

1. Structure de garnissage (20) composée d'au moins deux séries juxtaposés d'éléments de garnissage identiques (21), dans laquelle
lesdits éléments de garnissage (21) sont des plaques torsadées ayant une forme d'hélice hélicoïdale,
une série comprend au moins deux éléments de garnissage (21) accolés dans le sens de leurs hauteurs, et
les éléments de garnissage (21) de deux séries distinctes sont juxtaposés de façon sensiblement parallèle et dans le sens de leurs hauteurs,
et dans laquelle,
les arêtes (22, 23) des deux extrémités de chacun des éléments de garnissage (21) sont sensiblement parallèles entre elles,
les arêtes (22, 23) des deux extrémités des éléments de garnissage (21) d'une même série sont sensiblement parallèles entre elles,
la structure de garnissage (20) comprend au moins deux séries dans lesquelles, les arêtes (22, 23) des extrémités des éléments de garnissage (21) de deux séries juxtaposées sont sensiblement perpendiculaires,
les arêtes (22) de quatre éléments de garnissage (21) adjacents des deux séries juxtaposées forment un carré, le carré étant fixé mécaniquement, et
les séries selon la deuxième direction sont juxtaposées entre les séries selon la première direction.

2. Structure de garnissage (20) selon la revendication 1 comprenant n séries d'éléments de garnissage (21), lesdites séries comprenant m éléments de garnissage accolés,
Où
n est compris entre 1 et 300 et
m est compris entre 2 et 300

3. Structure de garnissage (20) selon l'une quelconque des revendications précédentes **caractérisée en ce que** le pas (p) de l'hélice hélicoïdale d'un élément de garnissage (21) est compris entre 10 et 30 cm.

4. Structure de garnissage (20) selon la revendication précédente **caractérisée en ce que** le pas (p) de tous les éléments de garnissage sont identiques.

5. Structure de garnissage (20) selon l'une quelconque des revendications précédentes **caractérisée en ce que** la largeur (I) des éléments de garnissages est comprise entre 5 et 30 cm.

6. Structure de garnissage (20) selon l'une quelconque des revendications précédentes **caractérisée en ce que** la hauteur (h) de la structure de garnissage (21) est comprise entre 20 et 100 cm.

7. Structure de garnissage (20) selon l'une quelconque des revendications précédentes **caractérisée en ce que** la hauteur (h) de la structure de garnissage est égale à au moins deux fois le pas (p) de l'hélice hélicoïdale de l'éléments de garnissage (21) présentant la valeur de pas (p) la plus élevée.

8. Garnissage structuré (15) composé d'au moins deux structures de garnissage (20) selon l'une quelconque des revendications 1 à 7.

9. Utilisation d'une structure de garnissage (20) selon l'une quelconque des revendications 1 à 7 ou d'un garnissage structuré (15) selon la revendication 8, pour la mise en contact d'un gaz avec un catalyseur, notamment pour une opération de strippage dudit catalyseur.

## Patentansprüche

1. Füllkörperstruktur (20), die aus mindestens zwei nebeneinander angeordneten Reihen von identischen Füllkörperelementen (21) besteht, wobei
es sich bei den Füllkörperelementen (21) um verdrehte Platten mit einer spiralförmigen Schraubenform handelt,
eine Reihe mindestens zwei Füllkörperelemente (21) umfasst, die in Richtung ihrer Höhe aneinandergrenzen, und
die Füllkörperelemente (21) der beiden getrennten Reihen im Wesentlichen parallel und in Richtung ihrer Höhe nebeneinander angeordnet sind,
und wobei
die Kanten (22, 23) der beiden Enden eines jeden der Füllkörperelemente (21) im Wesentlichen parallel zueinander sind,
die Kanten (22, 23) der beiden Enden der Füllkörperelemente (21) derselben Reihe im Wesentlichen parallel zueinander sind,
die Füllkörperstruktur (20) mindestens zwei Reihen umfasst, bei denen die Kanten (22, 23) der Enden der Füllkörperelemente (21) der beiden nebeneinander angeordneten Reihen im Wesentlichen senkrecht sind,
die Kanten (22) von vier benachbarten Füllkörperelementen (21) von zwei nebeneinander angeordneten Reihen ein Quadrat bilden, wobei das Quadrat mechanisch fixiert ist, und
die Reihen in der zweiten Richtung zwischen den Reihen in der ersten Richtung nebeneinander angeordnet sind.

2. Füllkörperstruktur (20) nach Anspruch 1, die n Reihen Füllkörperelemente (21) umfasst, wobei die Reihen m aneinandergrenzende Füllkörperelemente umfassen,
wobei n zwischen 1 und 300 beträgt und
m zwischen 2 und 300 beträgt.

3. Füllkörperstruktur (20) nach einem der vorhergehenden Ansprüche, **dadurch gekennzeichnet, dass** die Steigung (p) der spiralförmigen Schraube eines Füllkörperelements (21) zwischen 10 und 30 cm beträgt.

4. Füllkörperstruktur (20) nach dem vorhergehenden Anspruch, **dadurch gekennzeichnet, dass** die Steigungen (p) aller Füllkörperelemente identisch sind.

5. Füllkörperstruktur (20) nach einem der vorhergehenden Ansprüche, **dadurch gekennzeichnet, dass** die Breite (I) der Füllkörperelemente zwischen 5 und 30 cm beträgt.

6. Füllkörperstruktur (20) nach einem der vorhergehenden Ansprüche, **dadurch gekennzeichnet, dass** die Höhe (h) der Füllkörperstruktur (21) zwischen 20 und 100 cm beträgt.

7. Füllkörperstruktur (20) nach einem der vorhergehenden Ansprüche, **dadurch gekennzeichnet, dass** die Höhe (h) der Füllkörperstruktur zumindest gleich dem Zweifachen der Steigung (p) der spiralförmigen Schraube der Füllkörperelemente (21) ist, die den größten Wert der Steigung (p) aufweist.

8. Strukturierter Füllkörper (15), der aus mindestens zwei Füllkörperstrukturen (20) nach einem der Ansprüche 1 bis 7 besteht.

9. Verwendung einer Füllkörperstruktur (20) nach einem der Ansprüche 1 bis 7 oder eines strukturierten Füllkörpers (15) nach Anspruch 8 zum In-Kontakt-Bringen eines Gases mit einem Katalysator, insbesondere für einen Vorgang zum Abstreifen des Katalysators.

## Claims

1. Packing structure (20) made up of at least two juxtaposed series of identical packing elements (21), wherein
said packing elements (21) are twisted plates having a helical helix shape,
a series comprises at least two packing elements (21) that adjoin one another in the direction of their heights, and
the packing elements (21) of two distinct series are juxtaposed in a substantially parallel fashion and in the direction of their heights,
and wherein,
the edge faces (22, 23) of the two ends of each of the packing elements (21) are substantially parallel to each other,
the edge faces (22, 23) of the two ends of the packing elements (21) of one and the same series are substantially parallel to each other,
the packing structure (20) comprises at least two series in which the edge faces (22, 23) of the ends of the packing elements (21) of two juxtaposed series are substantially perpendicular,
the edge faces (22) of four adjacent packing elements (21) of the two juxtaposed series form a square, the square being fastened mechanically, and
the series in the second direction are juxtaposed between the series in the first direction.

2. Packing structure (20) according to Claim 1, comprising n series of packing elements (21), said series comprising m adjoining packing elements,
wherein n is between 1 and 300 and
m is between 2 and 300

3. Packing structure (20) according to either one of the preceding claims, **characterized in that** the pitch (p) of the helical helix of a packing element (21) is between 10 and 30 cm.

4. Packing structure (20) according to the preceding claim, **characterized in that** the pitches (p) of all the packing elements are identical.

5. Packing structure (20) according to any one of the preceding claims, **characterized in that** the width (I) of the packing elements is between 5 and 30 cm.

6. Packing structure (20) according to any one of the preceding claims, **characterized in that** the height (h) of the packing structure (21) is between 20 and 100 cm.

7. Packing structure (20) according to any one of the preceding claims, **characterized in that** the height (h) of the packing structure is equal to at least twice the pitch (p) of the helical helix of the packing elements (21) having the highest pitch (p) value.

8. Structured packing (15) made up of at least two packing structures (20) according to any one of Claims 1 to 7.

9. Use of a packing structure (20) according to any one of Claims 1 to 7 or of a structured packing (15) according to Claim 8, for bringing a gas into contact with a catalyst, in particular for an operation of stripping said catalyst.
